# EUROPÄISCHE PATENTSCHRIFT

(11) **EP 2 049 302 B1**
(45) Veröffentlichungstag und Bekanntmachung des Hinweises auf die Patenterteilung: **10.11.2010**
(21) Anmeldenummer: 07765782.3
(22) Anmeldetag: 04.07.2007
(51) Int. Cl.: B23Q 11/00, F16C 19/00, F16C 39/00, H02K 7/00

(54) **RUNDTISCHLAGERUNGS- UND ANTRIEBSVORRICHTUNG**
ROTARY TABLE MOUNTING AND DRIVE DEVICE
DISPOSITIF DE ROULEMENT ET D'ENTRAÎNEMENT D'UNE TABLE CIRCULAIRE

(30) Priorität: 02.08.2006 DE 102006036051
(43) Veröffentlichungstag der Anmeldung: 22.04.2009
(73) Patentinhaber: Schaeffler Technologies GmbH & Co. KG, 91074 Herzogenaurach (DE)
(72) Erfinder: BODE, Helmut, 91074 Herzogenaurach (DE); SCHREIBER, Martin, 91074 Herzogenaurach (DE); SCHMID, Günter, 90475 Nürnberg (DE)
(86) Internationale Anmeldenummer: PCT/EP2007/056716
(87) Internationale Veröffentlichungsnummer: WO 2008/015069

(56) Entgegenhaltungen:
- DE-A1- 4 128 276
- DE-A1- 19 953 118
- DE-C1- 10 204 965

## Beschreibung

### Gebiet der Erfindung

Die Erfindung betrifft eine Vorrichtung zur Lagerung und zum Antrieb eines Rundtisches, insbesondere einer Werkzeugmaschine.

### Hintergrund der Erfindung

Rundtischlager mit Wälz- oder Gleitlagerung sind beispielsweise aus der DE 20 2004 006 697 U1 bekannt. In der DE 43 31 042 A1 ist ein Rundtischantrieb einer Werkzeugmaschine beschrieben, welcher spielfrei arbeiten soll. Die Lagerung von Rundtischen ist prinzipiell mittels hydrostatischer Lager, wie beispielsweise aus der DD 24 34 56 A 1 bekannt, oder mittels Luftlager, wie aus der DE 199 53 118 A1 bekannt, möglich. Ein generelles Problem bei Rundtischlagerungen und -antrieben können Schwingungen darstellen, die insbesondere bei der Zerspanung von Werkstücken auftreten.

Aus der EP 1 529 596 A2 ist eine Schalttischbaugruppe mit zwei Lagern bekannt, wobei das erste Lager zwischen einer Oberfläche eines Drehtisches und einem Rahmen und das zweite Lager zwischen einer Oberfläche eines Absatzteils des Drehtisches und einem Lagerträger positioniert ist.

### Aufgabe der Erfindung

Der Erfindung liegt die Aufgabe zugrunde, eine Rundtischlagerungs- und Antriebsvorrichtung anzugeben, welche besonders unempfindlich gegenüber mechanischen Schwingungen ist.

### Zusammenfassung der Erfindung

Diese Aufgabe wird erfindungsgemäß gelöst durch eine Vorrichtung mit den Merkmalen des Anspruchs 1. Diese insbesondere für eine Werkzeugmaschine geeignete Vorrichtung zur Lagerung und zum Antrieb eines Rundtisches weist zwei Lagerungsvorrichtungen auf, nämlich eine Axial-Radial-Wälzlagerung sowie eine aktive Magnetlagerung, worunter eine mit Elektromagneten arbeitende Magnetlagerung verstanden wird. Zusätzlich zu diesen Lagerungsvorrichtungen, welche der drehbaren Lagerung des Rundtisches auf einem Gestell dienen, weist die erfindungsgemäße Vorrichtung einen elektrischen Direktantrieb auf, dessen Rotor starr mit dem Rundtisch und dessen Stator starr mit dem Gestell verbunden ist. Die Kombination von Wälzlagerung, aktiver Magnetlagerung und elektrischem Direktantrieb ermöglicht eine besonders steife Lagerung und einen spielfreien Antrieb des Rundtisches bei gleichzeitig kompaktem Aufbau der gesamten Vorrichtung. Die aktive Magnetlagerung wirkt vorzugsweise ausschließlich in axiale Richtung, bezogen auf die Drehachse des Rundtisches. Alternativ ist auch eine radiale oder eine kombinierte axiale und radiale aktive Magnetlagerung realisierbar.

Der elektrische Direktantrieb des Rundtisches ist vorzugsweise als permanentmagneterregter Synchronmotor, auch als Torquemotor bezeichnet, ausgebildet. In vorteilhafter Ausgestaltung bildet das bestrombare Primärteil des Torquemotors den Stator des elektrischen Direktantriebs, während der fest mit dem Rundtisch verbundene Rotor ausschließlich mit Permanentmagneten bestückt ist. Vorzugsweise werden Permanentmagnete aus Magnetmaterial mit hoher magnetischer Energie verwendet, wie beispielsweise NdFeB oder SmCo. Die Permanentmagnete sind bevorzugt auf einem Ring aus Sintermaterial befestigt, womit Ummagnetisierungsverluste gering gehalten werden.

Die Position und / oder der Bewegungszustand des Rundtisches ist mittels eines oder mehrerer Sensoren erfassbar. Zur Ermittlung von Ortsinformationen sind Sensoren geeignet, die optisch, induktiv, magnetisch, kapazitiv, taktil, mit Wirbelstrom oder mit Ultraschall arbeiten. Im Fall optischer Messverfahren kommen Reflexlicht-Messungen oder Triangulations-Messungen in Betracht. Beschleunigungssensoren, welche insbesondere zur Messung axialer Beschleunigungen am Rundtisch geeignet sind, arbeiten beispielsweise mit seismischer Masse oder mit piezokeramischen Elementen. Die Auslenkung einer seismischen Masse ist insbesondere mittels Dehnungsmessstreifen oder induktiv erfassbar. Unabhängig von der Bauart des mindestens einen Sensors ist dieser in vorteilhafter Weise mit der aktiven Magnetlagerung derart verknüpft, dass durch die Ansteuerung der Magnetlagerung Gegenkräfte zu Schwingungen des Rundtisches erzeugt werden. Eine zu diesem Zweck vorgesehene Regeleinrichtung umfasst vorzugsweise mehrere, kaskadiert geschaltete Regler, nämlich Lageregler, Geschwindigkeitsregler, Beschleunigungsregler und / oder Stromregler. Eine Leistungselektronik, über die einzelne Spulen der aktiven Magnetlagerung betrieben werden, wird vorzugsweise mittels Pulsweitenmodulation angesteuert. Die bestrombaren Spulen der Magnetlagerung sind vorzugsweise, unabhängig von der Art deren Ansteuerung, mit dem Gestell der Rundtischlagerungs- und Antriebsvorrichtung verbunden und bilden das Primärteil der Magnetlagerung, während ein mit dem Drehtisch verbundenes Sekundärteil der Magnetlagerung mit Permanentmagneten bestückt ist. Einzelne Permanentmagnete des Sekundärteils der Magnetlagerung sind vorzugsweise jeweils in einem ringförmigen Bereich angeordnet.

In einer sowohl hinsichtlich des Platzbedarfs als auch der Kraftverteilung vorteilhaften Ausgestaltung ist die aktive Magnetlagerung radial außerhalb der Axial-Radial-Wälzlagerung angeordnet, während die letztgenannte Lagerung und der elektrische Direktantrieb in axial benachbarten, sich radial überlappenden Bereichen angeordnet sind.

Aufgrund der Anordnung der Primärteile des Direktantriebs sowie der Magnetlagerung am Gestell der Lagerungs- und Antriebsvorrichtung ist keine Zuführung elektrischer Energie zum Rundtisch erforderlich. Soweit von einem Sensor detektierte Signale vom Rundtisch zum Gestell zu übertragen sind, kann eine Übertragung elektrischer Signale beispielsweise über Schleifringkontakte erfolgen. Von einem Sensor gelieferte optische Signale sind ggf. per Lichtleiter übertragbar. In jedem Fall sind die aufgenommenen Signale oder hieraus generierte Daten an eine Datenverarbeitungsanlage übertragbar, welche auch eine Fernwartung der Rundtischlagerungs- und Antriebsvorrichtung, insbesondere deren schwingungstilgender Komponenten, d.h. der Sensorik sowie der diese mit der aktiven Magnetlagerung verknüpfenden Regeleinrichtung, ermöglicht.

Nachfolgend wird ein Ausführungsbeispiel der Erfindung anhand einer Zeichnung näher erläutert. Hierin zeigen:

### Kurze Beschreibung der Zeichnung

- Figur 1: einen schematischen Querschnitt einer Rundtischla- gerungs- und Antriebsvorrichtung,
- Figur 2: die Anordnung mehrerer Spulen, welche Teile einer aktiven Magnetlagerung bilden, auf einem Gestell der Vorrichtung nach Figur 1,
- Figur 3: den prinzipiellen Aufbau einer Regeleinrichtung der Vorrichtung nach Figur 1, und
- Figur 4: in einer Übersichtsdarstellung die Vorrichtung nach Figur 1 mit angeschlossenen Energieversorgungs- und Datenverarbeitungseinrichtungen.

### Ausführliche Beschreibung der Zeichnung

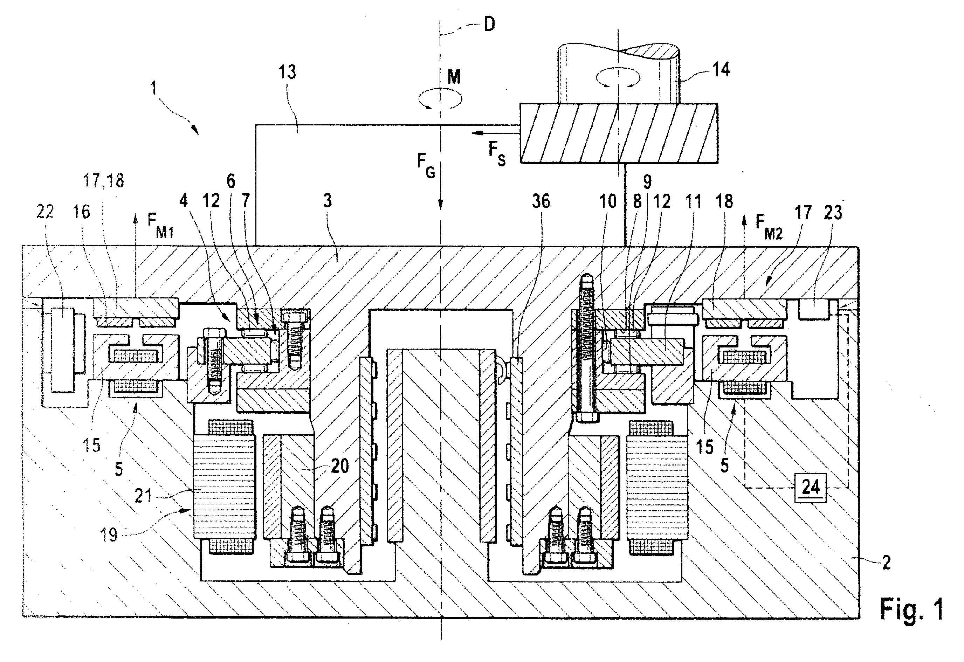

Die Figur 1 zeigt vereinfacht eine Rundtischlagerungs- und antriebsvorrichtung 1, welche ein Gestell 2 sowie einen hierauf drehbar gelagerten Rundtisch 3 umfasst. Zur Lagerung des Rundtisches 3 sind eine Axial-Radial-Wälzlagerung 4 sowie eine aktive Magnetlagerung 5 vorgesehen. Die Axial-Radial-Wälzlagerung 4 stellt eine Kombination einer doppelt wirkenden Axiallagerung 6 mit einer Radiallagerung 7 dar. Hierbei beschreiben zwei Laufbahnen 8, 9 der Axiallagerung 6 zusammen mit einer zwischen diesen angeordneten Laufbahn 10 der Radiallagerung 7 eine U-förmige Kontur, in welche ein am Gestell 2 befestigter Ring 11 eingreift. Zwischen dem Ring 11 und den Laufbahnen 8, 9, 10 rollen Zylinderrollen 12 als Wälzkörper ab.

Auf dem Rundtisch 3, welcher Teil einer Werkzeugmaschine ist, ist ein Werkstück 13 angeordnet, das mittels eines rotierenden Werkzeugs 14 bearbeitet wird. Die Gewichtskraft des Werkstücks 13 ist mit F_{G}, eine Schnittkraft mit F_{S} bezeichnet. Die Schnitt- oder Bearbeitungskraft F_{S} erzeugt ein auf den Rundtisch 3 wirkendes Drehmoment M. Die Drehachse des Rundtisches 3 ist mit D bezeichnet. Im Folgenden beziehen sich die Begriffe "radial" und "axial", soweit nicht anders angegeben, auf diese Drehachse D.

Radial außerhalb der Axial-Radial-Wälzlagerung 4 und im selben axialen Bereich befindet sich die aktive Magnetlagerung 5, welche sich aus einem bestrombaren, mit dem Gestell 2 verbundenen Primärteil 15 und einem mit dem Drehtisch 3 verbundenen, mit Permanentmagneten 16 bestückten Sekundärteil 17 zusammensetzt. Die Permanentmagnete 16 sind ringförmig oder ringsegmentförmig ausgebildet. In jedem Fall befinden sich Permanentmagnete 16 in verschiedenen, im Ausführungsbeispiel zwei, ringförmigen Bereichen. Die einzelnen Permanentmagnete 16, beispielsweise Seltenerdmagnete, sind auf einem Ring 18 aus Sintermaterial befestigt und übertragen über diesen Magnetkräfte F_{M1}, F_{M2} auf den Rundtisch 3. Je nach Ansteuerung von Komponenten der Primärteile 15 können die Magnetkräfte F_{M1}, F_{M2} in Richtung der Gewichtskraft F_{G} oder in entgegengesetzter Richtung wirken.

Der Drehantrieb des Rundtisches 3 erfolgt mittels eines elektrischen Direktantriebs 19, nämlich eines Torquemotors. Der als permanentmagneterregter Synchronmotor aufgebaute Torquemotor 19 weist einen mit dem Rundtisch 3 verbundenen Rotor 20 und einen mit dem Gestell 2 verbundenen Stator 21 auf. Hierbei ist der Stator 21 als bestrombares Primärteil und der Rotor 20 als permanentmagnetbestücktes Sekundärteil des Synchronmotors 19 ausgebildet. Im dargestellten Ausführungsbeispiel handelt es sich bei dem Torquemotor 19 um einen Innenläufermotor; ebenso ist jedoch auch ein Außenläufermotor als elektrischer Direktantrieb 19 realisierbar. In beiden Fällen zeichnet sich der Direktantrieb 19 insbesondere durch Spiel- und Hysteresefreiheit aus.

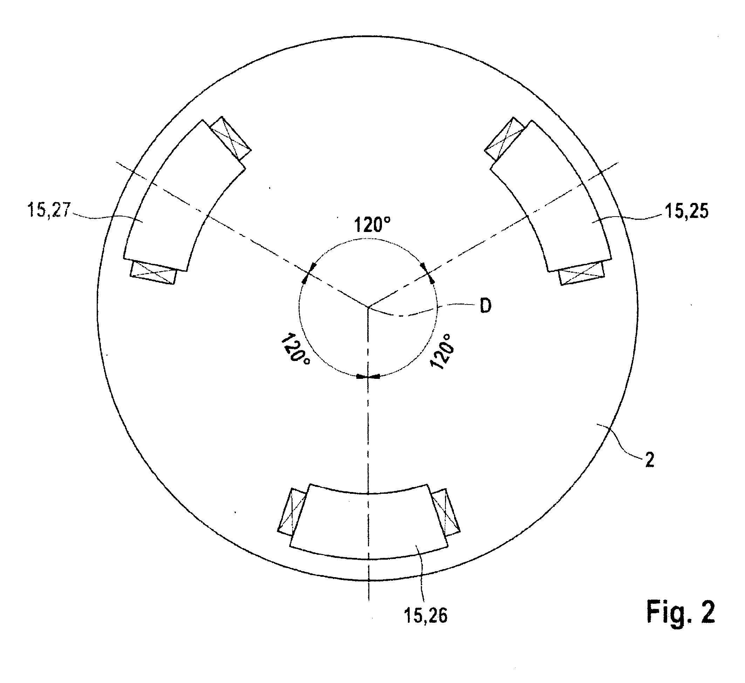

Die Positionierung sowie der Bewegungszustand des Rundtisches 3 ist mittels jeweils mindestens eines Wegsensors 22 und Beschleunigungssensors 23 erfassbar. Die Sensoren 22, 23 ermöglichen insbesondere die Detektion mechanischer Schwingungen und sind mittels einer Regeleinrichtung 24 mit der aktiven Magnetlagerung 5 verknüpft. Wie in Figur 2 vereinfacht dargestellt, umfasst das Primärteil 15 der aktiven Magnetlagerung 5 beispielsweise drei gleichmäßig über den Umfang verteilte Spulen 25, 26, 27, welche mit dem Sekundärteil 17 der Magnetlagerung 5 zusammenwirken. Ebenso wie mehrere Spulen 25, 26, 27 rotationssymmetrisch um die Drehachse D angeordnet sind, sind auch mehrere, beispielsweise drei, Beschleunigungssensoren 23 rotationssymmetrisch um die Drehachse D angeordnet. Dies ermöglicht die ortsabhängige Erfassung und Auswertung von Schwingungszuständen des Rundtisches 3. Die Regeleinrichtung 24 ist derart ausgebildet, dass mittels der Spulen 25, 26, 27 Kräfte in den Rundtisch 3 eingeleitet werden, die den detektierten Schwingungen entgegenwirken, wobei je nach Art der auftretenden Schwingungen die mittels verschiedener Spulen 25, 26, 27 zu einem bestimmten Zeitpunkt erzeugten Magnetkräfte F_{M1}, F_{M2} gleichgerichtet oder entgegengerichtet sein können. Mit anderen Worten: In einem ersten Betriebszustand der Regeleinrichtung 24 sind sämtliche Spulen 25, 26, 27 derart angesteuert, dass alle von den Spulen 25, 26, 27 erzeugten Kräfte F_{M1}, F_{M2} in dieselbe Richtung wirken. In einem zweiten Betriebszustand der Regeleinrichtung 24 ist dagegen die Kraft F_{M1}, welche durch die Spule 25 erzeugt wird, der Kraft F_{M2}, welche durch eine der Spulen 26, 27 erzeugt wird, entgegengerichtet. Somit ist die mittels der aktiven Magnetlagerung 5 realisierte Schwingungstilgungseinrichtung in der Lage, sich auf unterschiedliche Schwingungszustände des Rundtisches 3 einzustellen.

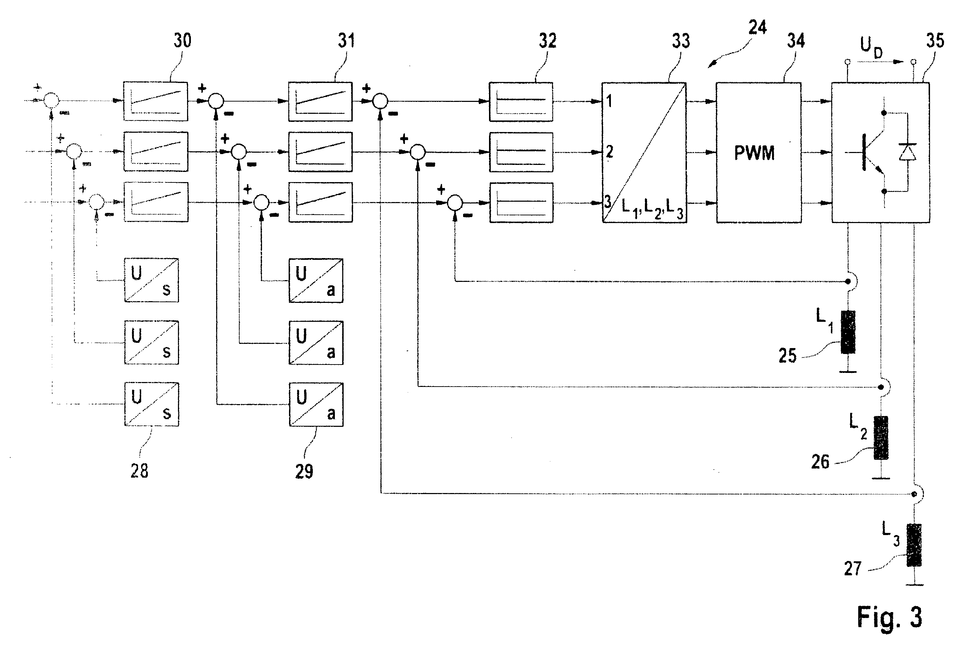

Die Regeleinrichtung 24 arbeitet, wie in Figur 3 dargestellt, mit einer kaskadierten Regelung. Verschiedene Messumformer 28, 29, welche an die Sensoren 22, 23 angeschlossen oder in diese integriert sind, liefern jeweils eine Ausgangsspannung U, die einer Orts- bzw. Beschleunigungsinformation s, a entspricht. Zusätzlich zu in Figur 3 dargestellten Lagereglern 30 und Beschleunigungsreglern 31 sind optional Geschwindigkeitsregler vorhanden. In jedem Fall wirken die Regler 30, 31 mit einem Stromregler 32 zusammen, welcher wiederum Eingangssignale an einen Signalumformer 33 leitet. Der Signalumformer 33 steuert über einen Pulsweitenmodulator 34 und eine Leistungselektronik 35, an welcher eine Spannung U_{D} anliegt, die Spulen 25, 26, 27, in Figur 3 auch als Induktivitäten L₁, L₂, L₃ bezeichnet, an. Der Stromverlauf in den Induktivitäten L₁, L₂, L₃ ist dabei nicht notwendigerweise gleichphasig.

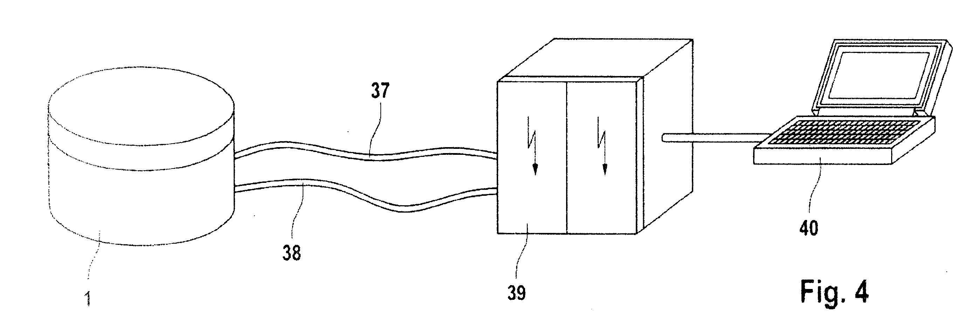

Mittels der Sensoren 22, 23 erfasste Signale werden über Schleifringkontakte 36 (Fig. 1) an feststehende Teile übertragen. Insgesamt ist die Rundtischlagerungs- und Antriebsvorrichtung 1, wie in Figur 4 dargestellt, mittels Signalkabel 37 und Leistungskabel 38 mit einem Schaltschrank 39 verbunden. An diesen wiederum ist eine Datenverarbeitungsanlage 40, beispielsweise in Form eines einzigen Rechners oder eines Rechnernetzwerks, angeschlossen, die insbesondere eine Fernwartung der Rundtischlagerungs- und Antriebsvorrichtung 1 ermöglicht.

### Bezugszeichen liste

- 1: Rundtischlagerungs- und antriebsvorrichtung
- 2: Gestell
- 3: Rundtisch
- 4: Axial-Radial-Wälzlagerung
- 5: aktive Magnetlagerung
- 6: Axiallagerung
- 7: Radiallagerung
- 8: Laufbahn
- 9: Laufbahn
- 10: Laufbahn
- 11: Ring
- 12: Zylinderrolle
- 13: Werkstück
- 14: Werkzeug
- 15: Primärteil
- 16: Permanentmagnet
- 17: Sekundärteil
- 18: Ring
- 19: elektrischer Direktantrieb, Torquemotor
- 20: Rotor
- 21: Stator
- 22: Wegsensor
- 23: Beschleunigungssensor
- 24: Regeleinrichtung
- 25: Spule
- 26: Spule
- 27: Spule
- 28: Messumformer
- 29: Messumformer
- 30: Lageregler
- 31: Beschleunigungsregler
- 32: Stromregler
- 33: Signalumformer
- 34: Pulsweitenmodulator
- 35: Leistungselektronik
- 36: Schleifringkontakt
- 37: Signalkabel
- 38: Leistungskabel
- 39: Schaltschrank
- 40: Datenverarbeitungsanlage

- a: Beschleunigungsinformation
- D: Drehachse
- F_{G}: Gewichtskraft
- F_{S}: Schnittkraft
- F_{M1}, F_{M2}: Magnetkraft
- L₁, L₂, L₃: Induktivität
- M: Drehmoment
- s: Ortsinformation
- U: Ausgangsspannung
- U_{D}: Spannung

## Patentansprüche

1. Rundtischlagerungs- und Antriebsvorrichtung,
- mit einem auf einem Gestell (2) drehbar gelagerten Rundtisch (3), wobei zur Lagerung des Rundtisches (3) eine Axial-Radial-Wälzlagerung (4) sowie eine aktive, mit Elektromagneten arbeitende, radial außerhalb der Axial-Radial-Wälzlagerung (4) angeordnete Magnetlagerung (5) vorgesehen sind,
- mit einem elektrischen Direktantrieb (19), dessen Rotor (20) starr mit dem Rundtisch (3) und dessen Stator (21) starr mit dem Gestell (2) verbunden ist,
wobei die Axial-Radial-Wälzlagerung (4) und der elektrische Direktantrieb (19) in axial benachbarten, sich radial überlappenden Bereichen angeordnet sind,
- mit einem Sensor (22, 23), welcher dazu vorgesehen ist, mindestens eine der Größen Positionierung und Bewegungszustand des Rundtisches (3) zu detektieren,
wobei der Sensor (23) zur Erfassung von Schwingungen des Rundtisches (3) ausgebildet ist, und
- mit einer den Sensor (23) mit der aktiven Magnetlagerung (5) verknüpfenden Regeleinrichtung (24), welche derart ausgebildet ist, dass mittels der aktiven Magnetlagerung (5) erzeugte Kräfte (F_{M1}, F_{M2}), welche in Richtung oder Gegenrichtung der Gewichtskraft (F_{G}) eines auf dem Rundtisch (3) angeordneten Werkstücks (13) wirken, Schwingungen des Rundtisches (3) entgegenwirken.

2. Vorrichtung nach Anspruch 1, **dadurch gekennzeichnet, dass** der elektrische Direktantrieb (19) als permanentmagneterregter Synchronmotor ausgebildet ist.

3. Vorrichtung nach Anspruch 2, **dadurch gekennzeichnet, dass** der Stator (21) des elektrischen Direktantriebs (19) als bestrombares Primärteil des Synchronmotors ausgebildet ist.

4. Vorrichtung nach einem der Ansprüche 1 bis 3, **dadurch gekennzeichnet, dass** die Regeleinrichtung (24) mehrere, kaskadiert geschaltete Regler (30, 31, 32) umfasst.

5. Vorrichtung nach einem der Ansprüche 1 bis 4, **dadurch gekennzeichnet, dass** die Regeleinrichtung (24) verschiedene Regler (30, 31, 32) aus der Gruppe an Reglern aufweist, welche Lageregler (30), Geschwindigkeitsregler, Beschleunigungsregler (31) und Stromregler (32) umfasst.

6. Vorrichtung nach einem der Ansprüche 1 bis 5, **dadurch gekennzeichnet, dass** die Regeleinrichtung (24) einen Pulsweitenmodulator (34) umfasst.

7. Vorrichtung nach einem der Ansprüche 1 bis 6, **dadurch gekennzeichnet, dass** die aktive Magnetlagerung (5) ein bestrombares, mit dem Gestell (2) verbundenes Primärteil (15) sowie ein mit dem Rundtisch (3) verbundenes, permanentmagnetbestücktes Sekundärteil (17) aufweist.

8. Vorrichtung nach Anspruch 7, **dadurch gekennzeichnet, dass** das Sekundärteil (17) der Magnetlagerung (5) mehrere, jeweils in einem ringförmigen Bereich angeordnete Magnete (16) aufweist.

9. Vorrichtung nach einem der Ansprüche 1 bis 8, **dadurch gekennzeichnet, dass** die aktive Magnetlagerung (5) datentechnisch mit einer die Durchführung einer Fernwartung ermöglichenden Datenverarbeitungsanlage (40) verbunden ist.

## Claims

1. Rotary table mounting and drive device
- having a rotary table (3) which is rotatably mounted on a frame (2),
wherein, in order to mount the rotary table (3), an axial-radial roller bearing (4) and an active magnetic bearing (5), which operates with electromagnets and is arranged radially outside the axial-radial roller bearing (4), are provided,
- having an electric direct drive (19) whose rotor (20) is rigidly connected to the round table (3), and whose stator (21) is rigidly connected to the frame (2),
wherein the axial-radial roller bearing (4) and the electric direct drive (19) are arranged in axially adjacent areas which overlap radially,
- having a sensor (22, 23) which is provided for detecting at least one of the variables comprising positioning and state of movement of the rotary table (3),
wherein the sensor (23) is designed to detect oscillations of the rotary table (3), and
- having a control device (24) which links the sensor (23) to the active magnetic bearing (5) and is designed in such a way that forces (F_{M1}, F_{M2}), which are generated by means of the active magnetic bearing (5) and act in the direction of, or in the opposite direction to, the weight (F_{G}) of a workpiece (13) which is arranged on the rotary table (3), counteract oscillations of the rotary table (3).

2. Device according to Claim 1, **characterized in that** the electric direct drive (19) is embodied as a permanent-magnet-excited synchronous motor.

3. Device according to Claim 2, **characterized in that** the stator (21) of the electric direct drive (19) is embodied as an energizable primary part of the synchronous motor.

4. Device according to one of Claims 1 to 3, **characterized in that** the control device (24) comprises a plurality of controllers (30, 31, 32) which are connected in a cascaded fashion.

5. Device according to one of Claims 1 to 4, **characterized in that** the control device (24) has various controllers (30, 31, 32) from the group of controllers which comprises position controllers (30), speed controllers, acceleration controllers (31) and current controllers (32).

6. Device according to one of Claims 1 to 5, **characterized in that** the control device (24) comprises a pulse width modulator (34).

7. Device according to one of Claims 1 to 6, **characterized in that** the active magnetic bearing (5) has an energizable primary part (15) which is connected to the frame (2), and a secondary part (17) which is connected to the rotary table (3) and is equipped with a permanent magnet.

8. Device according to Claim 7, **characterized in that** the secondary part (17) of the magnetic bearing (5) has a plurality of magnets (16) which are respectively arranged in an annular region.

9. Device according to one of Claims 1 to 8, **characterized in that** the active magnetic bearing (5) is connected in terms of data to a data processing system (40) which allows remote maintenance to be carried out.

## Revendications

1. Dispositif de support et d'entraînement d'une table circulaire, comprenant :
- une table circulaire (3) montée à rotation sur un bâti (2), un support sur palier à roulement axial-radial (4) ainsi qu'un support sur palier magnétique (5) actif, fonctionnant avec des électroaimants, disposé radialement en dehors du support sur palier à roulement axial-radial (4), étant prévus pour supporter la table circulaire (3),
- un entraînement direct électrique (19), dont le rotor (20) est connecté rigidement à la table circulaire (3) et dont le stator (21) est connecté rigidement au bâti (2),
le support sur palier à roulement axial-radial (4) et l'entraînement direct (19) étant disposés dans des régions se chevauchant radialement adjacentes axialement,
- un capteur (22, 23) qui est prévu pour détecter au moins l'une des valeurs de positionnement et d'état de mouvement de la table circulaire (3),
le capteur (23) étant réalisé pour détecter des oscillations de la table circulaire (3), et
- un dispositif de réglage (24) reliant le capteur (23) au support magnétique actif (5), lequel est réalisé de telle sorte que les forces (F_{M1}, F_{M2}) produites au moyen du support magnétique actif (5), qui agissent dans la direction de la force de pesanteur (F_{G}) ou la direction opposée, d'une pièce (13) disposée sur la table circulaire (3), s'opposent à des oscillations de la table circulaire (3).

2. Dispositif selon la revendication 1, **caractérisé en ce que** l'entraînement direct électrique (19) est réalisé sous forme de moteur synchrone excité par un aimant permanent.

3. Dispositif selon la revendication 2, **caractérisé en ce que** le stator (21) de l'entraînement direct électrique (19) est réalisé sous forme de partie primaire du moteur synchrone, pouvant être alimentée en courant.

4. Dispositif selon l'une quelconque des revendications 1 à 3, **caractérisé en ce que** le dispositif de réglage (24) comprend plusieurs régulateurs (30, 31, 32) montés en cascade.

5. Dispositif selon l'une quelconque des revendications 1 à 4, **caractérisé en ce que** le dispositif de réglage (24) présente différents régulateurs (30, 31, 32) appartenant au groupe de régulateurs qui inclut des régulateurs de position (30), des régulateurs de vitesse, des régulateurs d'accélération (31) et des régulateurs de courant (32).

6. Dispositif selon l'une quelconque des revendications 1 à 5, **caractérisé en ce que** le dispositif de réglage (24) comprend un modulateur de largeur d'impulsions (34).

7. Dispositif selon l'une quelconque des revendications 1 à 6, **caractérisé en ce que** le support sur palier magnétique (5) actif présente une partie primaire (15) pouvant être alimentée en courant et connectée au bâti (2), ainsi qu'une partie secondaire (17) munie d'aimants permanents et connectée à la table circulaire (3).

8. Dispositif selon la revendication 7, **caractérisé en ce que** la partie secondaire (17) du support sur palier magnétique (5) présente plusieurs aimants (16) disposés à chaque fois dans une région annulaire.

9. Dispositif selon l'une quelconque des revendications 1 à 8, **caractérisé en ce que** le support sur palier magnétique (5) actif est connecté par une technique de données à une installation de traitement des données (40) permettant de mettre en oeuvre une télémaintenance.
